# EUROPÄISCHE PATENTSCHRIFT

(11) **EP 2 185 412 B1**
(45) Veröffentlichungstag und Bekanntmachung des Hinweises auf die Patenterteilung: **09.03.2011**
(21) Anmeldenummer: 08786870.9
(22) Anmeldetag: 05.08.2008
(51) Int. Cl.: B64D 13/02, F16K 1/22, F16K 47/04

(54) **AUSSTRÖMVENTIL FÜR EIN LUFTFAHRZEUG**
OUTFLOW VALVE FOR AN AIRCRAFT
SOUPAPE DE DÉCHARGE POUR UN AÉRONEF

(30) Priorität: 06.08.2007 DE 102007036999
(43) Veröffentlichungstag der Anmeldung: 19.05.2010
(73) Patentinhaber: Nord-Micro AG & Co. OHG, 60388 Frankfurt am Main (DE)
(72) Erfinder: STEINERT, Martin, 63500 Seligenstadt (DE); KAMEIER, Frank, 40468 Düsseldorf (DE); VRANJES, Dusan, 60388 Frankfurt (DE)
(74) Vertreter: Preissner, Nicolaus
(86) Internationale Anmeldenummer: PCT/EP2008/060260
(87) Internationale Veröffentlichungsnummer: WO 2009/019264

(56) Entgegenhaltungen:
- EP-A- 1 783 409
- WO-A-2005/023649
- DE-A1- 10 240 762
- US-A- 3 740 006
- US-A- 5 881 995
- US-A- 6 116 541

## Beschreibung

Die vorliegende Erfindung betrifft ein Ausströmventil für ein Luftfahrzeug zur Steuerung einer Fluidströmung von einer ersten Umgebung zu einer zweiten Umgebung, mit einem Rahmen zur Anordnung in einem Bereich einer Öffnung eines Trennelements, das die erste Umgebung von der zweiten Umgebung trennt, sowie einer ersten Klappe und einer zweiten Klappe zur Steuerung der Fluidströmung durch die Öffnung zwischen der ersten Umgebung und der zweiten Umgebung, wobei die Klappen in dem Rahmen beweglich sind, und wobei die Klappen Vorsprünge aufweisen, die zur Reduktion der Geräuschentwicklung Wirbel in der Fluidströmung bilden und von Oberflächen der Klappen abragen und in die Fluidströmung einragen.

Derartige Ventile werden häufig zur Steuerung des Drucks in abgetrennten Umgebungen verwendet. Eine solche abgetrennte Umgebung hat dabei ein Einlassventil, durch das ein Fluid in die Umgebung hineinströmen kann. Durch das Hineinströmen des Fluids in die abgetrennte Umgebung baut sich in der Umgebung ein Druck auf. Über ein Ventil der eingangs genannten Art ist als Auslass ein Strömungsquerschnitt steuerbar, über den sich der Druck durch Ausströmen des Fluids verringern kann. Je kleiner dabei der Strömungsquerschnitt ist, desto größer bleibt der Druck in der abgetrennten Umgebung.

Dieses Prinzip der Drucksteuerung wird beispielsweise in Druckkammern oder in Luftfahrzeugen angewandt. Entsprechende Ventile sind aus dem Stand der Technik vielfältig bekannt.

So zeigt die US 3,426,984 ein Ausströmventil für ein Luftfahrzeug. Das Ausströmventil ist in einer Öffnung der Außenhaut eines Luftfahrzeugs angeordnet. Zwei Ventilklappen sind an den Rändern der Öffnung schwenkbar gelagert und über eine Mechanik so miteinander verbunden, dass sie gemeinsam verschwenkbar sind. Die Klappen sind jeweils von dem Rand der Öffnung aufeinander zu abragend angeordnet und überlappen in einem mittleren Abschnitt, wenn das Ventil geschlossen ist. In diesem Fall erstrecken sich die Klappen im Wesentlichen in Verlängerung der Außenhülle des Luftfahrzeugs, so dass sich wenig aerodynamische Angriffspunkte ergeben. Im geöffneten Zustand des Ventils schirmt eine Klappe die Öffnung gegen einen etwa an der Außenseite des Luftfahrzeugs vorbeifließenden Luftstrom ab.

Allgemein tritt bei der Öffnung von Ventilen der eingangs genannten Art eine deutlich wahrnehmbare Geräuschentwicklung durch die ausströmende Luft auf. Daher finden sich im Stand der Technik diverse Ansätze, mit denen die Geräuschentwicklung reduziert werden soll.

Die DE 103 13 729 A1 schlägt beispielsweise vor, durch die Form der Klappen bei der Öffnung des Ventils eine Laval-Düse nachzubilden. Dadurch strömt die Luft mit Überschallgeschwindigkeit aus dem Ventil aus, und der Schall wird von dem Ventil weggeführt.

Die US 6,116,541 offenbart ein Ventil gemäß dem Oberbegriff des Anspruchs 1, wobei die Anströmkante einer zweiten Klappe mit Kerben ausgefürt ist. Weiter ist an der ersten Klappe ein quer zu der Strömungsrichtung der ausströmenden Luft verlaufender Steg vorgesehen, der die ausströmende Luft verlangsamen soll. Zusätzlich sind in einer strömungsseitigen Kante Einkerbungen zur Reduktion der Geräuschentwicklung vorgesehen.

Weiter zeigt die WO 2005/023649 A1 ein Ventil der eingangs genannten Art, bei dem zur Luftverwirbelung in Kanten der Ventilklappen Einkerbungen eingebracht sind. Weiter ist offenbart, Bereiche der Klappen aufzurauen, um die Geräuschentwicklung der ausströmenden Luft zu verringern.

Der Erfindung liegt die Aufgabe zugrunde, bei einem Ventil der eingangs genannten Art die Geräuschentwicklung zu verringern.

Gemäß Patentanspruch 1 wird diese Aufgabe durch die Merkmale des kennzeichnenden Teils gelöst.

Vorteilhafte Ausgestaltungen sind Gegenstand der Unteransprüche.

Die erfindungsgemäße Lösung gewährleistet, dass die Ausbildung störender Geräusche durch den von den Vorsprüngen bewirkten ungleichmäßigen Strömungsverlauf verhindert wird. Dies wird dadurch erreicht, dass sich aufgrund der Form der Vorsprünge Wirbel an den Vorsprüngen bilden, die sich in Form von Wirbelzöpfen auseinanderlaufend in Strömungsrichtung ausbreiten. Durch das auseinanderlaufen überlappen sich die Wirbel stromabwärts und stören sich so gegenseitig. Dadurch wird verhindert, dass sich gleichmäßige oder stationäre Wirbel ausbilden können, die zu einer erhöhten Geräuschentwicklung führen würden.

Ferner ist es von Vorteil, dass das Ventil durch Veränderung der Form und Anordnung der Vorsprünge an verschiedene Einsatzsituationen, wie beispielsweise unterschiedliche Strömungsgeschwindigkeiten oder Fluide verschiedener Eigenschaften, angepasst werden kann, ohne dass die Grundkonstruktion des Ventils verändert werden müsste.

Die erste Klappe kann vorteilhaft auf einer Innenseite in der Nähe einer an einen Strömungsquerschnitt, durch den das Fluid ausströmt, grenzenden Kante erste Vorsprünge mit einem Grundriss, Seitenflächen und einer Oberseite aufweist. Ausströmendes Fluid fließt zunächst an der Innenseite der ersten Klappe entlang, bevor es durch den Strömungsquerschnitt ausströmt. Die Anordnung der Vorsprünge in dem Strömungsweg des Fluids stellt sicher, dass die Vorsprünge ihre maximale Wirkung entfalten können.

In einer vorteilhaften Ausgestaltung weisen die ersten Vorsprünge einen im Wesentlichen dreieckigen Grundriss auf, wobei ein Eckpunkt des Grundrisses eine Spitze und die beiden anderen Eckpunkte eine Basis des Grundrisses festlegen. Ein solcher dreieckiger Grundriss erlaubt es, die Druckverteilungen einer Fluidströmung günstig zu beeinflussen und Wirbelzöpfe mit einem günstigen Durchmesser zu erzeugen.

Die Oberseite der ersten Vorsprünge kann vorteilhaft konkav geformt sein. Dadurch kann die Strömung günstig beeinflusst werden.

Die Oberseite der ersten Vorsprünge ist in Strömungsrichtung ansteigend ausgebildet. Durch ein Ansteigen in Strömungsrichtung wird gewährleistet, dass die ersten Vorsprünge die Fluidströmung graduell beeinflussen und sich keine ungewünschten Singularitäten ausbilden können.

In einer besonders vorteilhaften Ausführungsform ist die Oberfläche der ersten Vorsprünge als Ausschnitt einer Zylinderoberfläche ausgebildet, wobei die Achse des Zylinders im Wesentlichen parallel zu dem Grundriss und senkrecht zu der Strömungsrichtung verläuft.

Weiter zeigt die Spitze des den Grundriss der ersten Vorsprünge bildenden Dreiecks vorteilhaft gegen die Strömungsrichtung.

Die ersten Vorsprünge können in Reihen, die quer zu der Strömungsrichtung verlaufen, angeordnet sein. Durch diese Ausgestaltung wird es ermöglicht, die Fluidströmung auf ihrer gesamten Breite zu beeinflussen.

Ferner sind die ersten Vorsprünge vorteilhaft reihenweise quer zu der Strömungsrichtung versetzt angeordnet. Dadurch wird zwischen den Reihen eine Wechselwirkung der Wirbelzöpfe angeregt.

Vorteilhaft weist die zweite Klappe auf einer Außenseite in der Nähe einer an den Strömungsquerschnitt grenzenden Kante erste Vorsprünge auf. Dies gewährleistet, dass das bereits ausgeströmte Fluid, das entlang des Trennelements an der Außenseite der zweiten Klappe entlangfließt, geräuschmindemd beeinflusst wird.

Ferner kann die zweite Klappe an einer Innenseite in der Nähe einer an den Strömungsquerschnitt grenzenden Kante zweite Vorsprünge mit einem Grundriss, Seitenflächen und einer Oberseite aufweisen.

Dadurch wird es ermöglicht, das an der Innenseite der zweiten Klappe entlangströmende Fluid vor dem Ausströmen zu konditionieren.

Die zweiten Vorsprünge weisen vorteilhaft einen im Wesentlichen trapezförmigen Grundriss auf, wobei eine kürzere Seite der parallelen Seiten des Grundrisses eine Spitze und eine längere der parallelen Seiten des Grundrisses eine Basis festlegen. Dieser Grundriss trägt den Strömungsgegebenheiten an den Orten Rechnung, an denen die zweiten Vorsprünge angeordnet werden.

Die Oberseite der zweiten Vorsprünge ist in Strömungsrichtung ansteigend ausgebildet. Dadurch wird eine Unstetigkeitsstelle beim Auftreffen der Fluidströmung auf die Vorsprünge vermieden.

Die Oberseite der zweiten Vorsprünge ist vorteilhaft eben ausgebildet.

Ferner ist die Spitze der zweiten Vorsprünge bevorzugt strömungsaufwärts der Basis angeordnet.

In einer vorteilhaften Ausgestaltung sind die zweiten Vorsprünge in einer Reihe im Wesentlichen quer zu der Strömungsrichtung angeordnet, wodurch sichergestellt ist, dass die Fluidströmung auf ihrer ganzen Breite von der Wirkung der zweiten Vorsprünge erfasst wird.

Die an den Strömungsquerschnitt grenzende Kante der zweiten Klappe ist vorteilhaft abgerundet ausgebildet, um die Fluidströmung möglichst wenig zu behindern.

In einer weiter bevorzugten Ausführungsform sind an den Klappen jeweils zwei Reihen erster Vorsprünge angeordnet.

Die Erfindung wird nachfolgend anhand eines Ausführungsbeispiels näher erläutert, das in den beigefügten schematischen Abbildungen dargestellt ist. Es zeigen:
- Fig. 1: eine perspektivische Ansicht einer Ausführungsform des erfin- dungsgemäßen Ventils;
- Fig. 2: einen Schnitt entlang einer Strömungsrichtung durch die erste Klappe und die zweite Klappe;
- Fig. 3: den in Fig. 2 mit III gekennzeichneten Ausschnitt;
- Fig. 4: eine perspektivische Sicht entlang der Fluidströmung auf die Klappen im geöffneten Zustand;
- Fig. 5: eine beispielhafte Anordnung von Vorsprüngen auf einer Klap- pe;
- Fig. 6: eine Draufsicht auf eine Ausführungsform der ersten Vorsprün- ge;
- Fig. 7: einen Querschnitt entlang der Linie VII-VII aus Fig. 6;
- Fig. 8: eine Draufsicht auf eine Ausführungsform der zweiten Vor- sprünge und
- Fig. 9: einen Querschnitt entlang der Linie IX-IX in Fig. 8.

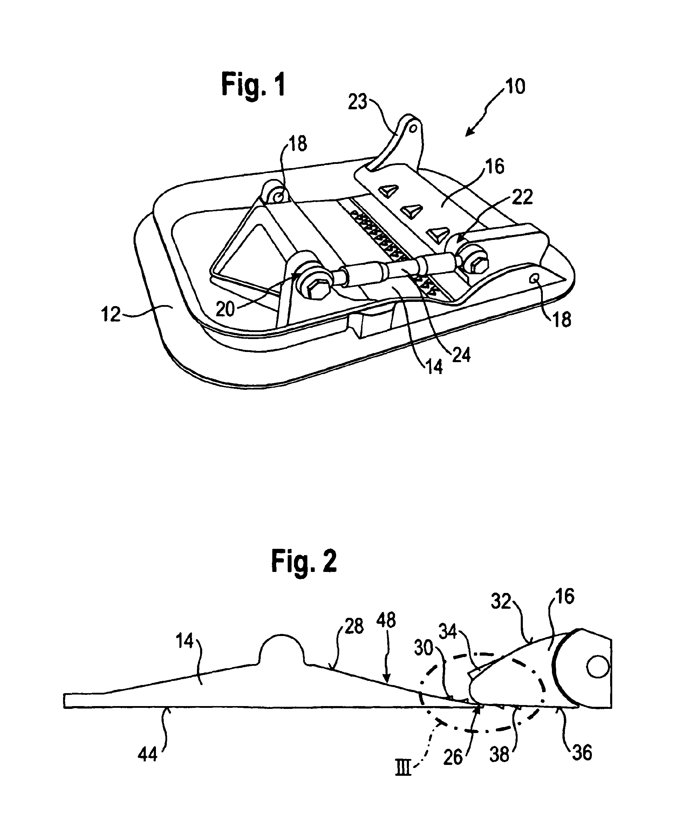

Das in Fig. 1 gezeigte Ventil 10 kommt als Ausströmventil (outflow valve) in einem Flugzeug zum Einsatz. Das Ventil 10 hat einen Rahmen 12, in dem eine erste Klappe 14 und eine zweite Klappe 16 angeordnet sind. Die erste Klappe 14 ist dabei größer als die zweite Klappe 16. Weiter sind die Klappen 14, 16 mittels Lagern 18 mit dem Rahmen 12 verschwenkbar verbunden. Der Rahmen 12 des Ventils 10 wird in eine Öffnung im Rumpf des Flugzeugs eingesetzt.

Die erste Klappe 14 weist einen Verbindungsabschnitt 20, und die zweite Klappe 16 einen Verbindungsabschnitt 22 auf. Die Verbindungsabschnitte 20, 22 sind mittels eines Gestänges 24 verbunden, das die Stellung der ersten Klappe 14 relativ zu der zweiten Klappe 16 festlegt.

Weiter weist die zweite Klappe 16 einen Steuerabschnitt 23 auf, der über ein Gestänge mit einem Antrieb (nicht gezeigt) verbunden wird, um die Schwenkposition der zweiten Klappe 16 steuern zu können. Da die Klappen 14, 16 durch das Gestänge 24 verbunden sind, kann die Position beider Klappen und somit der Öffnungsquerschnitt mit einem einzelnen Antrieb gesteuert werden.

Im geschlossenen Zustand, wie er in Fig. 2 gezeigt ist, berühren sich die Klappen 14, 16 in einem Kontaktbereich 26. Dadurch ist ein sicheres Schließen des Ventils 10 gewährleistet.

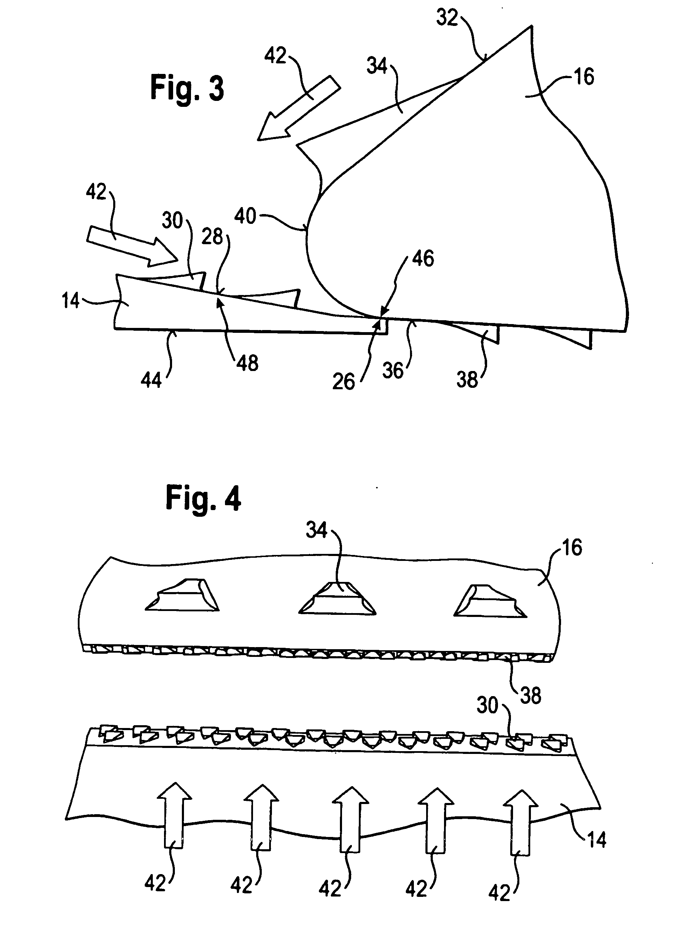

Die erste Klappe 14 weist an einer Innenseite 28 erste Vorsprünge 30 auf. Die zweite Klappe 16 weist an ihrer Innenseite 32 zweite Vorsprünge 34 und an ihrer Außenseite 36 erste Vorsprünge 38 auf. Diese Anordnung ist im Detail in Fig. 3 dargestellt.

Der Kantenbereich 40 der zweiten Klappe 16 ist abgerundet ausgebildet. Zu der Innenseite 32 hin sind die zweiten Vorsprünge 34 unmittelbar anschließend an den Kantenbereich 40 angeordnet und stehen aus der ebenen Fläche der Innenseite 32 vor, so dass sie in den Luftstrom 42 eintauchen. Die ersten Vorsprünge 38 sind von dem Kantenbereich 40 in Richtung der Außenseite 36 mit einem Abstand zu dem abgerundeten Kantenbereich 40 angeordnet.

Die Innenseite 28 der ersten Klappe 14 hat einen Kontaktbereich 46, der an den Kontaktbereich 26 angrenzt. Im Bereich des Kontaktbereichs 46 verläuft die Innenseite 28 parallel zu der Außenseite 44 der ersten Klappe 14. An den Kontaktbereich 46 schließt sich ein Rampenbereich 48 an, in dem, mit einem Abstand zu dem Kontaktbereich 46 die ersten Vorsprünge 30 so angeordnet sind, dass sie in den Luftstrom 42 einragen.

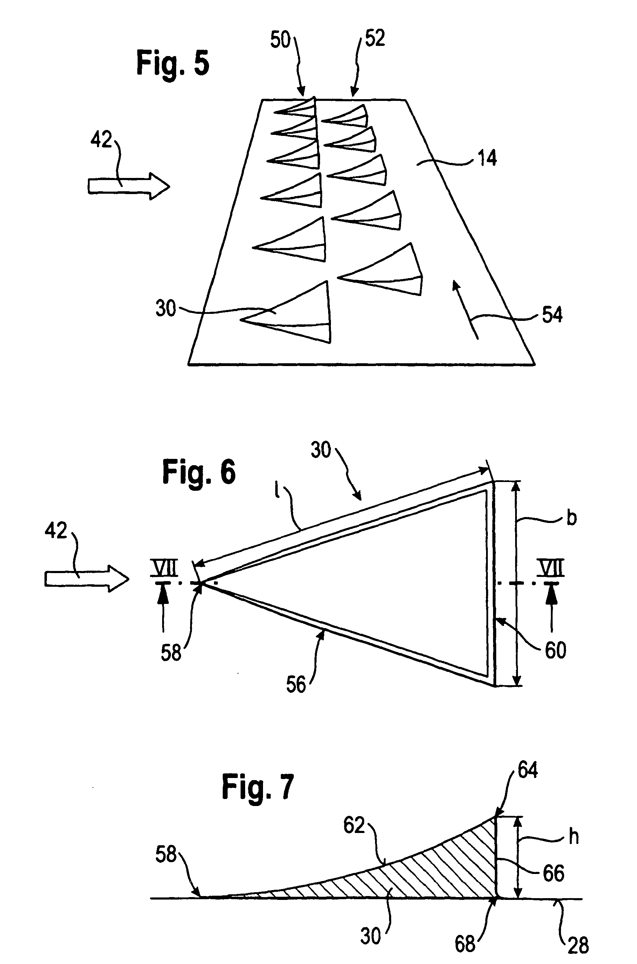

Die Vorsprünge 30, 34, 38 sind, wie in Fig. 4 und 5 zu sehen, in Reihen 50, 52 quer zu der Strömungsrichtung des Luftstroms 42 angeordnet. Die Vorsprünge 30, 34, 38 sind voneinander getrennt und mit Abstand zueinander ausgebildet. Dabei sind jeweils zwei Reihen 50, 52 erster Vorsprünge 30, 38 und eine Reihe zweiter Vorsprünge 34 vorgesehen. Die Vorsprünge 30 einer ersten Reihe 50 sind zu den Vorsprüngen einer zweiten Reihe 52 in der Querrichtung 54 versetzt angeordnet.

Von den zweiten Vorsprüngen 34 ist eine Reihe mit drei Vorsprüngen 34 ausgebildet.

Die ersten Vorsprünge 38 sind nach demselben Prinzip angeordnet wie die ersten Vorsprünge 30.

Die in Fig. 6 und 7 dargestellten ersten Vorsprünge 30 haben einen dreiecksförmigen Grundriss 56. Der Luftstrom 42 strömt über die Spitze 58 zu der Basis 60. Die Oberseite 62 der ersten Vorsprünge 30 ist konkav als Ausschnitt einer Zylinderoberfläche ausgeführt. Die Oberseite 62 steigt in Richtung des Luftstroms 42 an und endet an der Strömungsabrisskante 64 an der im Wesentlichen senkrecht zu der Innenseite 28 verlaufenden Rückseite 66. Am Fuß der Rückseite 66 ist ein abgerundeter Sockelabschnitt 68 ausgebildet.

Das Verhältnis der Breite b der Basis 60 zur Länge I der Schenkel des Grundrisses 56 beträgt 0,7. Des Weiteren beträgt die Höhe h der Strömungsabrisskante 64 das 0,2-fache der Länge I. Das Verhältnis des Durchmessers des Zylinders, der zur Ausbildung der Oberfläche 62 verwendet wird, zu der Länge I beträgt 4.

Die ersten Vorsprünge 38 sind im Wesentlichen so ausgebildet wie die ersten Vorsprünge 30. Allerdings ist ihre Form an die Strömungsumgebung ihrer Anordnung angepasst. Die ersten Vorsprünge 38 haben beispielsweise keinen Sockelabschnitt 68.

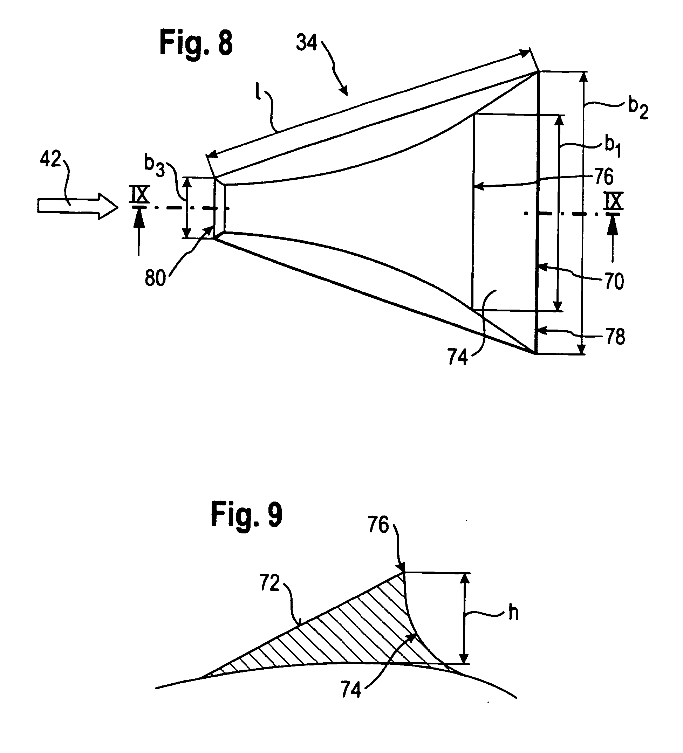

Die zweiten Vorsprünge 34 haben, wie in den Fig. 8 und 9 zu sehen, einen ausgeprägten Sockelabschnitt 74. Dadurch unterscheiden sich die Breite b₁ der Strömungsabrisskante 76 und die Breite b₂ der Basis 78 des trapezförmigen Grundrisses 70 der zweiten Vorsprünge 34 deutlich. Die Oberseite 72 ist, anders als bei den ersten Vorsprüngen 30, 38, eben ausgebildet. Die Breite b₁ der Strömungsabrisskante 76 der zweiten Vorsprünge 34 beträgt das 0,7-fache der Länge I des Grundrisses 70. Die Breite b₂ beträgt das 1,1-Fache der Länge I und die Breite b₃ der Spitze 80 beträgt das 0,1-fache der Länge I. Die Höhe h der Strömungsabrisskante 76 beträgt das 0,3-fache der Länge I.

Die Form der Vorsprünge 30, 34, 38 mit ihrem hohen Längen-Breiten-Verhältnis bewirkt Wirbel. Das Zusammenwirken der von den Vorsprüngen 30, 34, 38 erzeugten Wirbelzöpfe verhindert eine Bildung gleichmäßiger oder stationärer Wirbel, die zu einer erhöhten Geräuschentwicklung führen können.

Wird das Ventil 10 also dadurch geöffnet, dass die erste Klappe 14 und die zweite Klappe 16 geöffnet werden, beginnt der Luftstrom 42 zu fließen, wie in Fig. 3 und 4 dargestellt. Die ersten Vorsprünge 30, 38 und die zweiten Vorsprünge 34 ragen in den Luftstrom 42 ein und erzeugen den oben beschriebenen Effekt.

Es ist zu beachten, dass die Anordnung und die Form der Vorsprünge an die jeweiligen Rahmenbedingungen angepasst werden muss. So sind Form und Anordnung der Vorsprünge 30, 34, 38 insbesondere von der Form der Klappen, der Druckdifferenz zwischen der Innenseite 28, 32 und der Außenseite 36, 44 sowie die Geschwindigkeit des Luftstroms 42 von entscheidender Bedeutung für die Konstruktion des Ventils 10.

Die Klappen 14, 16 mit den Vorsprüngen 30, 34, 38 werden beispielsweise durch Fräsen aus einem Aluminiumblock hergestellt. Dies eröffnet die Möglichkeit einer vollautomatischen Herstellung, beispielsweise auf CNC-Fräsmaschinen. Dem Fachmann sind allerdings weitere sowohl manuelle als auch automatische für die Herstellung nutzbare Verfahren bekannt. Ebenso sind dem Fachmann weitere geeignete Materialien zur Verwendung in dem Ventil 10 bekannt.

Das Ventil 10 wird mit dem Rahmen 12 in einer nicht dargestellten Öffnung einer Luftfahrzeugaußenhaut eingebaut. Durch die Stellung der Klappen 14, 16 wird gesteuert, wie viel Luft aus der Kabine entweichen kann. Dadurch ist der Kabineninnendruck mittels einer Änderung der Stellung der Klappen 14 steuerbar. Die in dem Luftstrom 42 einliegenden Vorsprünge 30, 34, 38 bewirken eine gezielte Beeinflussung des Luftstroms 42, die dazu führt, dass die Geräuschbelästigung für Passagiere des Luftfahrzeugs minimiert wird.

### Bezugszeichenliste

- 10: Ventil
- 12: Rahmen
- 14: erste Klappe
- 16: zweite Klappe
- 18: Lager
- 20: Verbindungsabschnitt
- 22: Verbindungsabschnitt
- 24: hydraulisches Element
- 26: Kontaktbereich
- 28: Innenseite
- 30: erste Vorsprünge
- 32: Innenseite
- 34: zweite Vorsprünge
- 36: Außenseite
- 38: erste Vorsprünge
- 40: Kantenbereich
- 42: Luftstrom
- 44: Außenseite
- 46: Kontaktbereich
- 48: Rampenbereich
- 50: Erste Reihe
- 52: Zweite Reihe
- 54: Querrichtung
- 56: Grundriss
- 58: Spitze
- 60: Basis
- 62: Oberseite
- 64: Strömungsabrisskante
- 66: Rückseite
- 68: Sockelabschnitt
- 70: Grundriss
- 72: Oberseite
- 74: Sockelabschnitt
- 76: Strömungsabrisskante
- 78: Basis
- 80: Spitze

- b: Breite
- b₁: Breite
- b₂: Breite
- b₃: Breite
- h: Höhe
- I: Länge

## Patentansprüche

1. Ausströmventil für ein Luftfahrzeug (10) zur Steuerung einer Fluidströmung von einer ersten Umgebung zu einer zweiten Umgebung, mit:
einem Rahmen (12) zur Anordnung in einem Bereich einer Öffnung eines Trennelements, das die erste Umgebung von der zweiten Umgebung trennt;
einer ersten Klappe (14) und einer zweiten Klappe (16) zur Steuerung der Fluidströmung durch die Öffnung zwischen der ersten Umgebung und der zweiten Umgebung, wobei die Klappen (14, 16) in dem Rahmen beweglich sind, und wobei
die Klappen (14, 16) Vorsprünge (30, 34, 38) aufweisen, die zur Reduktion der Geräuschentwicklung Wirbel in der Fluidströmung bilden, wobei die Vorsprünge (30, 34, 38) von Oberflächen der Klappen (14, 16) abragen und in die Fluidströmung einragen, **dadurch gekennzeichnet, dass**die Vorsprünge (30, 34, 38) voneinander getrennt und mit Abstand zueinander angeordnet sind, dass die Oberseite der Vorsprünge (30, 34, 38) in Strömungsrichtung ansteigt und dass die Vorsprünge (30, 34, 38) von einem Kontaktbereich (26, 46) zwischen den Klappen (14, 16) beabstandet angeordnet sind.

2. Ventil (10) nach Anspruch 1, **dadurch gekennzeichnet, dass** die erste Klappe (14) auf einer Innenseite (28) in der Nähe einer an einen Strömungsquerschnitt grenzenden Kante erste Vorsprünge (30) mit einem Grundriss (56), Seitenflächen und einer Oberseite (62) aufweist.

3. Ventil (10) nach Anspruch 2, **dadurch gekennzeichnet, dass** die ersten Vorsprünge (30) einen im Wesentlichen dreieckigen Grundriss (56) aufweisen, wobei ein Eckpunkt des Grundrisses eine Spitze (58) und die beiden anderen Eckpunkte eine Basis (60) des Grundrisses festlegen.

4. Ventil (10) nach Anspruch 2 oder Anspruch 3, **dadurch gekennzeichnet, dass** die Oberseite (62) der ersten Vorsprünge (30) konkav geformt ist.

5. Ventil (10) nach einem der Ansprüche 2 bis 4, **dadurch gekennzeichnet, dass** die Oberseite (62) der ersten Vorsprünge (30) als Ausschnitt einer Zylinderoberfläche ausgebildet ist, wobei die Achse des Zylinders im Wesentlichen parallel zu dem Grundriss (56) und senkrecht zu der Strömungsrichtung verläuft.

6. Ventil (10) nach einem der Ansprüche 2 bis 5, **dadurch gekennzeichnet, dass** die Spitze (58) des den Grundriss (56) der ersten Vorsprünge (30) bildenden Dreiecks gegen die Strömungsrichtung zeigt.

7. Ventil (10) nach einem der Ansprüche 2 bis 6, **dadurch gekennzeichnet, dass** die ersten Vorsprünge (30) in Reihen (50, 52), die quer zu der Strömungsrichtung verlaufen, angeordnet sind.

8. Ventil (10) nach Anspruch 7, **dadurch gekennzeichnet, dass** die ersten Vorsprünge (30) reihenweise quer zu der Strömungsrichtung versetzt angeordnet sind.

9. Ventil (10) nach einem der voranstehenden Ansprüche, **dadurch gekennzeichnet, dass** die zweite Klappe (16) auf einer Außenseite (44) in der Nähe einer an den Strömungsquerschnitt grenzenden Kante erste Vorsprünge (38) aufweist.

10. Ventil (10) nach einem der voranstehenden Ansprüche, **dadurch gekennzeichnet, dass** die zweite Klappe (16) an einer Innenseite (32) in der Nähe einer an den Strömungsquerschnitt grenzenden Kante zweite Vorsprünge (34) mit einem Grundriss (70), Seitenflächen und einer Oberseite (72) aufweist.

11. Ventil (10) nach Anspruch 10, **dadurch gekennzeichnet, dass** die zweiten Vorsprünge (34) einen im Wesentlichen trapezförmigen Grundriss (70) aufweisen, wobei eine kürzere Seite der parallelen Seiten des Grundrisses (70) eine Spitze (80) und eine längere der parallelen Seiten des Grundrisses (70) eine Basis (78) festlegen.

12. Ventil (10) nach einem der Ansprüche 10 oder 11, **dadurch gekennzeichnet, dass** die Oberseite (72) der zweiten Vorsprünge (34) eben ausgebildet ist.

13. Ventil (10) nach einem der Ansprüche 10 bis 12, **dadurch gekennzeichnet, dass** die Spitze der zweiten Vorsprünge (34) strömungsaufwärts der Basis (78) angeordnet ist.

14. Ventil (10) nach einem der Ansprüche 10 bis 13, **dadurch gekennzeichnet, dass** die zweiten Vorsprünge (34) in einer Reihe im Wesentlichen quer zu der Strömungsrichtung angeordnet sind.

15. Ventil (10) nach einem der voranstehenden Ansprüche, **dadurch gekennzeichnet, dass** der an den Strömungsquerschnitt grenzende Kantenbereich (40) der zweiten Klappe (16) abgerundet ausgebildet ist.

## Claims

1. An outflow valve for an aircraft (10) to control a fluid flow from a first environment to a second environment, comprising:
a frame (12) for arrangement of a separating element in an area of an opening and which separates the first environment from the second environment;
a first flap (14) and a second flap (16) for controlling the fluid flow through the opening between the first environment and the second environment, wherein the flaps (14, 16) are moveable within the frame, and wherein
the flaps (14, 16) have protrusions (30, 34, 38), which create eddies in the fluid flow to reduce noise, wherein the protrusions (30, 34, 38) protrude from surfaces of the flaps (14, 16) and into the fluid flow,
**characterised in that** the protrusions (30, 34, 38) are separate from each other and spaced with respect to each other, **in that** the top surface of the protrusions (30, 34, 38) forms an upward ramp in the flow direction and **in that** the protrusions (30, 34, 38) are spaced from a mutual contacting area (26, 46) of the flaps (14, 16).

2. The valve (10) according to claim 1, **characterised in that** the first flap (14) has first protrusions (30) on an inner surface (28) in the vicinity of an edge adjacent to a flow cross-section, and with a bottom (56), side surfaces and a top surface (62).

3. The valve (10) according to claim 2, **characterised in that** the first protrusions (30) have an essentially triangular bottom (56), wherein a
corner point of the bottom defines a tip (58) and the two other corner points define a base (60) of the bottom.

4. The valve (10) according to claim 2 or claim 3, **characterised in that** the top surface (62) and the first protrusions (30) have a concave configuration.

5. The valve (10) according to any one of claims 2 to 4, **characterised in that** the top surface (62) of the first protrusions (30) is formed as a section of a cylindrical surface, wherein the axis of the cylinder is essentially parallel to the bottom (56) and normal to the flow direction.

6. The valve (10) according to any one of claims 2 to 5, **characterised in that** the tip (58) of the triangle forming the bottom (56) of the first protrusions (30) faces the flow direction.

7. The valve (10) according to any one of claims 2 to 6, **characterised in that** the first protrusions (30) are arranged in rows (50, 52) extending transverse to the flow direction.

8. The valve (10) according to claim 7, **characterised in that** the first protrusions (30) are arranged in staggered rows transverse to the flow direction.

9. The valve (10) according to any one of the preceding claims, **characterised in that** the second flap (16) has first protrusions (38) on an outer surface (44) in the vicinity of an edge adjacent to the flow cross-section.

10. The valve (10) according to any one of the preceding claims, **characterised in that** the second flap (16) has second protrusions (34) on an inner surface (32) in the vicinity of an edge adjacent to the flow cross-section, with a bottom (70), side surfaces and a top surface (72).

11. The valve (10) according to claim 10, **characterised in that** the second protrusions (34) have an essentially trapezoidal bottom (70), wherein a shorter side of the parallel sides of the bottom (70) defines a tip (80) and a longer one of the parallel sides of the bottom (70) defines a base (78).

12. The valve (10) according to claim 10 or 11, **characterised in that** the top surface (72) of the second protrusions (34) has a planar configuration.

13. The valve (10) according to any one of claims 10 to 12, **characterised in that** the tip of the second protrusions (34) is arranged upstream of the base (78).

14. The valve (10) according to any one of claims 10 to 13, **characterised in that** the second protrusions (34) are arranged in a row essentially transverse to the flow direction.

15. The valve (10) according to any one of the preceding claims, **characterised in that** the edge area (40) adjacent to the flow cross-section of the second flap (16) has a rounded configuration.

## Revendications

1. Soupape de décharge (10) pour un aéronef destinée à la commande d'un écoulement de fluide depuis un premier environnement vers un second environnement, comprenant :
un cadre (12) à agencer dans une région d'une ouverture d'un élément de séparation, qui sépare le premier environnement du second environnement ;
un premier clapet (14) et un second clapet (16) pour commander l'écoulement de fluide à travers l'ouverture entre le premier environnement et le second environnement, les clapets (14, 16) étant mobiles dans le cadre, et dans laquelle
les clapets (14, 16) comportent des saillies (30, 34, 38) qui forment des tourbillons dans l'écoulement de fluide en vue de réduire le développement de bruits, lesdites saillies (30, 34, 38) dépassant depuis des surfaces les clapets (14, 16) et pénétrant dans l'écoulement de fluide,
**caractérisée en ce que** les saillies (30, 34, 38) sont agencées séparément les unes des autres et à distance les unes par rapport aux autres,
**en ce que** la face supérieure des saillies (30, 34, 38) va en montant en direction de l'écoulement, et
**en ce que** les saillies (30, 34, 38) sont agencées à distance d'une zone de contact (26, 46) entre les clapets (14, 16).

2. Soupape (10) selon la revendication 1, **caractérisée en ce que** le premier clapet (14) présente sur une face intérieure (28) au voisinage d'une arête adjacente à une section d'écoulement des premières saillies (30) avec un contour (56), des surfaces latérales et une face supérieure (62).

3. Soupape (10) selon la revendication 2, **caractérisée en ce que** les premières saillies (30) présentent un contour (56) sensiblement triangulaire, dans lequel un sommet du contour définit une pointe (58) et les deux autres sommets définissent une base (60) du contour.

4. Soupape (10) selon la revendication 2 ou 3, **caractérisée en ce que** la face supérieure (62) des premières saillies (30) est formée de manière concave.

5. Soupape (10) selon l'une des revendications 2 à 4, **caractérisée en ce que** la face supérieure (62) des premières saillies (30) est formée sous forme d'une portion d'une surface cylindrique, telle que l'axe du cylindre s'étend sensiblement parallèlement au contour (56) et perpendiculairement à la direction d'écoulement.

6. Soupape (10) selon l'une des revendications 2 à 5, **caractérisée en ce que** la pointe (58) du triangle qui forme le contour (56) des premières saillies (30) est dirigée à l'encontre de la direction d'écoulement.

7. Soupape (10) selon l'une des revendications 2 à 6, **caractérisée en ce que** les premières saillies (30) sont agencées en rangées (50, 52) qui s'étendent perpendiculairement à la direction d'écoulement.

8. Soupape (10) selon la revendication 7, **caractérisée en ce que** les premières saillies (30) sont agencées en rangées et en décalage perpendiculairement à la direction d'écoulement.

9. Soupape (10) selon l'une des revendications précédentes, **caractérisée en ce que** le second clapet (16) présente sur une face extérieure (44) des premières saillies (38) au voisinage d'une arête adjacente à la section d'écoulement.

10. Soupape (10) selon l'une des revendications précédentes, **caractérisée en ce que** le second clapet (16) présente, sur une face intérieure (32) et au voisinage d'une arête adjacente à la section d'écoulement, des secondes saillies (34) avec un contour (70), des surfaces latérales et une face supérieure (72).

11. Soupape (10) selon la revendication 10, **caractérisée en ce que** les secondes saillies (34) présentent un contour (70) sensiblement trapézoïdal, dans lequel un petit côté des côtés parallèles du contour (70) définit une pointe (80) et un long côté des côtés parallèles du contour (70) définit une base (78).

12. Soupape (10) selon l'une des revendications 10 au 11, **caractérisée en ce que** la face supérieure (72) des secondes saillies (34) est réalisée plane.

13. Soupape (10) selon l'une des revendications 10 à 12, **caractérisée en ce que** la pointe des secondes saillies (34) est agencée en amont de la base (78).

14. Soupape (10) selon l'une des revendications 10 à 13, **caractérisée en ce que** les secondes saillies (34) sont agencées dans une rangée sensiblement perpendiculairement à la direction d'écoulement.

15. Soupape (10) selon l'une des revendications précédentes, **caractérisée en ce que** la zone de l'arête (40) du second clapet (16) adjacente à la section d'écoulement est réalisée de forme arrondie.
